Europäisches Patentamt

European Patent Office

Office européen des brevets

(19)

(11) Veröffentlichungsnummer: **0 022 465**
**A1**

(12) **EUROPÄISCHE PATENTANMELDUNG**

(21) Anmeldenummer: 80102806.9

(22) Anmeldetag: 21.05.80

(51) Int. Cl.³: **A 47 J 43/08, A 47 J 43/046**

(30) Priorität: 17.07.79 DE 2928787

(71) Anmelder: **Zyliss Zysset AG, Industriering, CH-3250 Lyss (CH)**

(43) Veröffentlichungstag der Anmeldung: 21.01.81
Patentblatt 81/3

(72) Erfinder: **Hartmann, Horst, Holbeinweg 5, D-7000 Stuttgart 1 (DE)**

(84) Benannte Vertragsstaaten: **AT BE CH FR GB IT LI LU NL SE**

(74) Vertreter: **Vogel, Georg, Hermann-Essig-Strasse 35, D-7141 Schwieberdingen (DE)**

(54) **Küchenmaschinen-Antriebseinheit.**

(57) Die Erfindung betrifft eine Küchenmaschinen-Antriebseinheit mit einer Abtriebswelle (20), deren Abtriebsende als erster Abtrieb für ein erstes aufsteckbares Werkzeug ausgebildet ist und bei der koaxial zur Abtriebswelle eine erste Abtriebshülse (33) als zweiter Abtrieb für ein zweites einsteckbares Werkzeug angeordnet ist, wobei die erste Abtriebshülse (33) mittels eines ersten Untersetzungsgetriebes von der Abtriebswelle antreibbar ist. Um einen dritten Abtrieb für ein drittes Werkzeug zu erhalten, ist zwischen der Abtriebswelle (20) und der ersten Abtriebshülse (33) eine zweite zurückgesetzte zweite Abtriebshülse (37) gelagert, die stirnseitig als dritter Abtrieb dient und mittels eines zweiten Untersetzungsgetriebes von der Abtriebswelle (20) antreibbar ist.

Firma
Zyliss Zysset AG
Industriering

CH-3250 L y s s

- 1 -

## Küchenmaschinen-Antriebseinheit

Die Erfindung betrifft eine Küchenmaschinen-Antriebseinheit mit einer Abtriebswelle, deren Abtriebsende als erster Abtrieb für ein erstes aufsteckbares Werkzeug ausgebildet ist, bei der koaxial zur Abtriebswelle eine erste Abtriebshülse als zweiter Abtrieb für ein zweites einsteckbares Werkzeug angeordnet ist, wobei die erste Abtriebshülse mittels eines ersten Untersetzungsgetriebes von der Abtriebswelle antreibbar ist.

Bei der bekannten Küchenmaschinen-Antriebseinheit dieser Art stehen zwei Abtriebe mit unterschiedlichen Drehzahlen zum Antrieb von Küchengeräten zur Verfügung, wie die US-PS 28 07 447 zeigt. Dabei kann je nach Stufenzahl des ersten Untersetzungsgetriebes der zweite Abtrieb gleich- oder gegensinnig zum ersten Abtrieb umlaufen. Die Ausscheidung für den einen oder anderen Antrieb eines Küchengerätes wird durch die Anschlußkupplung am Küchengerät vorgenommen. Soll das Küchengerät vom ersten Abtrieb schnell angetrieben werden, dann ist die Anschlußkupplung des Küchengerätes auf das Abtriebsende der Abtriebswelle abgestimmt und kann drehfest auf dieses aufgesteckt werden. Soll das Küchengerät jedoch vom zweiten Abtrieb langsam angetrieben werden, dann ist die Anschlußkupplung des Küchengerätes auf die Steckaufnahme der ersten Abtriebshülse abgestimmt und kann drehfest in diese eingesteckt werden.

Es gibt heute eine Vielzahl der unterschiedlichsten Küchengeräte, die mit den unterschiedlichsten Drehzahlen angetrieben werden. Soll eine Küchenmaschinen-Antriebseinheit der eingangs erwähnten Art universell für all diese Küchengeräte eingesetzt werden, dann reichen die beiden Abtriebe mit unterschiedlichen Drehzahlen nicht mehr aus.

Wie die DE-OS 28 09 416 zeigt, läßt sich die Anzahl der Abtriebe einer Küchenmaschinen-Antriebseinheit dadurch erhöhen, daß mehrere Arme mit einer oder mehreren Kupplungen für Küchengeräte ausschwenkbar vorgesehen sind, so daß beide Seiten der Arme mit Kupplungen versehen werden können. Dieser Aufbau einer Küchenmaschinen-Antriebseinheit erfordert einen erheblichen Getriebeaufwand, da in jedem Arm getrennte Untersetzungsgetriebe untergebracht sind und da die Arme zudem als getrennte Einheiten schwenkbar am Gerätegehäuse angebracht werden müssen.

Es ist Aufgabe der Erfindung, eine Küchenmaschinen-Antriebseinheit der eingangs erwähnten Art mit mehr als zwei Abtrieben mit unterschiedlichen Drehzahlen zu versehen, ohne daß dadurch der Gehäuseaufbau kompliziert wird und der Getriebeaufwand erheblich ansteigt.

Dieswird erfindungsgemäß dadurch erreicht, daß zwischen der Abtriebswelle und der ersten Abtriebshülse eine zweite zurückgesetzte Abtriebshülse gelagert ist, die stirnseitig als dritter Abtrieb für ein drittes aufsteckbares Werkzeug ausgebildet ist und die mittels eines zweiten Untersetzungsgetriebes von der Abtriebswelle antreibbar ist.

Auf diese Weise wird im Bereich einer Anschlußstelle ein dritter Abtrieb mit einer neuen Drehzahl geschaffen, der ebenfalls von der Abtriebswelle antreibbar ist und so nur die zweite Abtriebshülse und das zweite Untersetzungsgetriebe erfordert, wobei das Antriebsritzel der Abtriebswelle mit ausgenützt werden kann.

Ist nach einer Ausgestaltung vorgesehen, daß die Abtriebswelle mittels des Antriebsendes mit einer Motorwelle eines Elektromotors koppelbar ist, dann kann diese getrennte Küchenmaschinen-Antriebseinheit als Zwischengerät zwischen dem anzutreibenden Küchengerät und einer Motorbaueinheit mit Anschlußkupplung für die Abtriebswelle verwendet werden.

Die Ausgestaltung kann jedoch auch so vorgenommen werden, daß die Abtriebswelle mittels des Antriebsendes und eines dritten Untersetzungsgetriebes mit der Motorwelle eines Elektromotors gekoppelt ist. Der Elektromotor ist dann in die Küchenmaschinen-Baueinheit einbezogen. Bei dieser Ausgestaltung kann die Anzahl der Abtriebe dadurch noch erhöht werden, daß das andere Ende der Motorwelle als vierter Abtrieb ein Kupplungselement für ein aufsteckbares viertes Werkzeug trägt. Die Drehzahl dieses vierten Abtriebes entspricht der Motordrehzahl.

Nach einer vorteilhaften Weiterbildung kann dabei vorgesehen sein, daß der vierte Abtrieb in einer Vertiefung des Gerätegehäuses mittels eines abnehmbaren Deckels abgedeckt ist.

Der Getriebeaufwand läßt sich nach einer Ausgestaltung dadurch klein halten, daß das erste Untersetzungsgetriebe ein Antriebsritzel der Abtriebswelle und ein auf einer Zwischenwelle gelagertes Doppel-Zahnrad umfaßt, das mittels eines Zahnkranzes großer Zähnezahl im Eingriff mit dem Antriebsritzel und mittels eines Zahnkranzes kleiner Zähnezahl im Eingriff mit einer Innenverzahnung großer Zähnezahl der ersten Abtriebshülse steht, und daß der Zahnkranz kleiner Zähnezahl im Eingriff mit einem Zahnkranz großer Zähnezahl steht, der fest mit der zweiten Abtriebshülse verbunden ist. Das erste Untersetzungsgetriebe wird in dieser Ausgestaltung zum Teil für das zweite Untersetzungsgetriebe ausgenützt. Eine ausreichende Abstufung der Drehzahlen des zweiten und dritten Abtriebse wird nach einer Ausgestaltung dadurch erreicht, daß die Zähnezahl des mit der zweiten Abtriebshülse fest verbundenen Zahnkranzes etwa halb so groß ist wie die Zähnezahl der Innenverzahnung der ersten Abtriebshülse.

Damit die Zwischenwelle für die Untersetzungsgetriebe gelagert werden kann, sieht eine Ausgestaltung vor, daß die Zwischenwelle mit dem einen Ende in einer Zwischenplatte gelagert ist, in der auch das antriebsseitige Ende der Abtriebswelle gelagert ist und die das erste und zweite Untersetzungsgetriebe abdeckt, daß das andere Ende der Zwischenwelle in einer Zwischenglocke gelagert ist, die in die Innenverzahnung der ersten Abtriebshülse ragt und einen Durchbruch in der Seitenwand aufweist, über den der Zahnkranz kleiner Zähnezahl des Doppel-Zahnrades mit der Innenverzahnung der ersten Abtriebshülse im Eingriff steht, daß die Zwischenglocke und die Zwischenplatte unverdrehbar mit dem Gehäuseteil verbunden sind und daß der Zahnkranz großer Zähnezahl des Doppel-Zahnrades außerhalb der Zwischenglocke mit dem Antriebsritzel der Abtriebswelle im Eingriff steht.

Das Eindringen von Flüssigkeiten in die Küchenmaschinen-Antriebseinheit im Bereich der drei Abtriebe wird dadurch vermieden, daß die zweite Abtriebshülse im Anschluß an den als Steckkupplung ausgebildeten dritten Abtrieb mittels Dichtungsringen zur Abtriebswelle und zur ersten Abtriebshülse hin abgedichtet ist.

Um die Reibungsverluste zwischen der Abtriebswelle und der zweiten Abtriebshülse bzw. zwischen der ersten und der zweiten Abtriebshülse möglichst klein zu halten, ist nach einer vorteilhaften Ausgestaltung vorgesehen, daß die zweite Abtriebshülse mittels Lagerbuchsen auf der Abtriebswelle und/oder in der ersten Abtriebshülse gelagert ist.

Der Gesamtaufbau der erfindungsgemäßen Küchenmaschinen-Antriebseinheit wird bevorzugt so ausgeführt, daß die Abtriebswelle vertikal angeordnet ist, wobei das Abtriebsende oben liegt und das untere Antriebsende mittels eines als Zahnriemenantrieb ausgebildeten dritten Untersetzungsgetriebes mit der Motorwelle eines vertikal im Gerätegehäuse angeordneten Elektromotors gekoppelt ist und daß das obere Ende der Motorwelle das Kupplungselement des vierten Abtriebes trägt.

Die Erfindung wird anhand eines in den Zeichnungen dargestellten Ausführungsbeispiels näher erläutert. Es zeigen:

Figur 1    im Schnitt den Teil der Küchenmaschinen-Antriebseinheit mit
den drei Abtrieben mit unterschiedlichen Drehzahlen, die an
einer Anschlußstelle zugänglich
sind und

Figur 2    im Schnitt den Teil der Küchenmaschinen-Antriebseinheit mit dem
Elektromotor und dem vierten Abtrieb.

Das glockenförmige Gehäuseteil 10 nimmt den Getriebeteil der erfindungsgemäßen Küchenmaschinen-Antriebseinheit auf. Der wesentlichste Teil des Getriebeteiles ist die Abtriebswelle 20, die mit dem unteren Antriebsende in dem Lager 20 gelagert ist. Das Lager 20 ist in der Bohrung 18 der Zwischenplatte 11 festgelegt. Die Zwischenplatte 11 ist mittels der in die Aufnahme 16 eingeschraubten Schraube 49 unverdrehbar am Gehäuseteil 10 festgelegt. Das ins Zentrum des hülsenförmigen Ansatzes 14 des Gehäuseteiles 10 ragende Abtriebsende 22 ist als Steckkupplung für eine erste Art von Küchengeräten ausgebildet, die mit einer darauf abgestimmten Anschlußkupplung versehen sind. Über dem Lager 20 ist die Abtriebswelle 20 als Antriebsritzel 21 kleiner Zähnezahl ausgebildet. Dieses Antriebsritzel 21 steht mit dem Zahnkranz 29 großer Zähnezahl des Doppel-Zahnrades 28 im Eingriff. Das Doppel-Zahnrad 28 ist auf einer Zwischenwelle 23 drehbar gelagert, deren unteres Ende 24 in einer Bohrung 50 der Zwischenplatte 11 und deren oberes Ende 25 in einer Bohrung 51 einer Zwischenglocke 26 gelagert sind. Die Zwischenglocke 26 ist unverdrehbar mit dem Gehäuseteil 10 verbunden, wie die Bohrung 31 im Flansch der Zwischenglocke 26 und die Aufnahme 17 im Gehäuseteil 10 erkennen lassen. Ein Arretierstift, der in die Bohrung 31 und die Aufnahme 17 eingebracht wird, kann diese Festlegung übernehmen.

Der Zahnkranz 30 kleiner Zähnezahl des Doppel-Zahnrades 28 steht durch den Durchbruch 27 der Zwischenglocke 26 mit der Innenverzahnung 36 der ersten Abtriebshülse 33 im Eingriff. Die Innenverzahnung 36 übergreift im Abstand die feststehende Zwischenglocke 26. Die erste Abtriebshülse 33 bildet im Bereich des Abtriebsendes 22 der Abtriebswelle 20 den zweiten Abtrieb, der als Innensteckaufnahme 34 ausgebildet ist. Dieses erste Untersetzungsgetriebe weist zwei Stufen auf und bringt eine große Untersetzung der Drehzahl der Abtriebswelle 20. Da in diesem ersten Untersetzungsgetriebe mit zwei Stufen jedoch die Innenverzahnung 36 einbezogen ist, hat der zweite Abtrieb eine dem ersten Abtrieb gegensinnige Drehrichtung. Der Dichtungsring 36 übernimmt die Abdichtung zwischen der in dem hülsenförmigen Ansatz 14 des Gehäuseteils 10 gelagerten ersten Abtriebshülse 33. Auf der Außenseite des Ansatzes 14 sind Verschlußelemente 14 angebracht, die zur Verbindung der Küchengeräte mit der Küchenmaschinen-Antriebseinheit dienen. Hat ein Küchengerät zweiter Art eine Anschlußkupplung, die auf die Steckaufnahme 34 der ersten Abtriebshülse 33 abgestimmt ist, dann wird das Küchengerät von diesem zweiten Abtrieb angetrieben. Die Anschlußkupplung des Küchengerätes hat dabei eine Ausnehmung, die das Abtriebsende 22 der Abtriebswelle 20 ohne Berührung aufnimmt.

Zwischen der Abtriebswelle 20 und der ersten Abtriebshülse 33 ist eine verkürzte zweite Abtriebswelle 37 gelagert, wobei, wie die Lagerbuchsen 40 und 41 zeigen, die Reibungsverluste verkleinert werden können. In gleicher Weise kann die zweite Abtriebshülse 37 auch nittels Lagerbuchsen in der ersten Abtriebshülse 33 gelagert sein. Die Stirnseite der zweiten Abtriebshülse 37 endet in einer Steckkupplung 42 und zwar im Anschluß an das Abtriebsende 22 der Abtriebswelle 20 und die Steckaufnahme 34 der ersten Abtriebshülse 33. Die zweite Abtriebshülse 37 ragt durch den Durchbruch 32 der Zwischenglocke 26 in den von dieser abgedeckten Raum und trägt dort einen Zahnkranz 39 großer Zähnezahl. Die Zähnezahl des Zahnkranzes 39 ist jedoch nur etwa halb so groß wie die der Innenverzahnung 36 der ersten Abtriebshülse 33. Der Zahnkranz 39 steht im Eingriff mit dem Zahnkranz 30 kleiner Zähnezahl des Doppel-Zahnrades 28 und wird daher in gleicher Drehrichtung wie die Abtriebswelle 20 angetrieben. Die Drehazhl der zweiten Abtriebshülse 37 ist daher kleiner als die Drehzahl der Abtriebswelle 20, jedoch größer als die Drehzahl der ersten Abtriebshülse 33. Die Drehrichtung der zweiten Abtriebshülse 37 ist gleichsinnig mit der Drehrichtung der Abtriebswelle 20, jedoch gegensinnig mit der Drehrichtung der ersten Abtriebshülse 33.

Küchengeräte dritter Art mit einer auf die Steckkupplung 42 der zweiten Abtriebshülse 37 angepaßten Anschlußkupplung werden daher vom dritten Abtrieb angetrieben. Dabei ist nur darauf zu achten, daß diese Anschlußkupplung der mit dem Abtriebsende 22 der Abtriebswelle 20 noch mit der Steckaufnahme 34 der ersten Abtriebshülse 33 in Berührung kommt bzw. zumindest nicht mit diesen in Wirkverbindung kommt.

Die Dichtungsringe 43 und 44 dichten die zweite Abtriebshülse 37 zu der Abtriebswelle 20 und zur ersten Abtriebshülse 33 hin ab und verhindern ein Eindringen von Flüssigkeit oder dgl. in den Getriebeteil.

Es ist leicht einzusehen, daß die erfindungsgemäße Küchenmachinen-Antriebseinheit über das an der Zwischenplatte 11 vorstehende Antriebsende mit einer getrennten Motoreinheit gekuppelt werden kann. Das Antriebsende der Abtriebswelle 20 ist dann als Kupplungselement ausgebildet und auf die Anschlußkupplung der Motoreinheit ausgelegt. Das Gehäuseteil 10 bzw. die Zwischenplatte 11 sind mit Verschlußelementen versehen, die eine Verbindung mit dem Gehäuse der Motoreinheit ermöglichen. In dieser Ausgestaltung ist die erfindungsgemäße·Küchenmaschinen-Antriebseinheit ein Zwischengerät zwischen der Motoreinheit und drei Arten von unterschiedlich antreibbaren Küchengeräten.

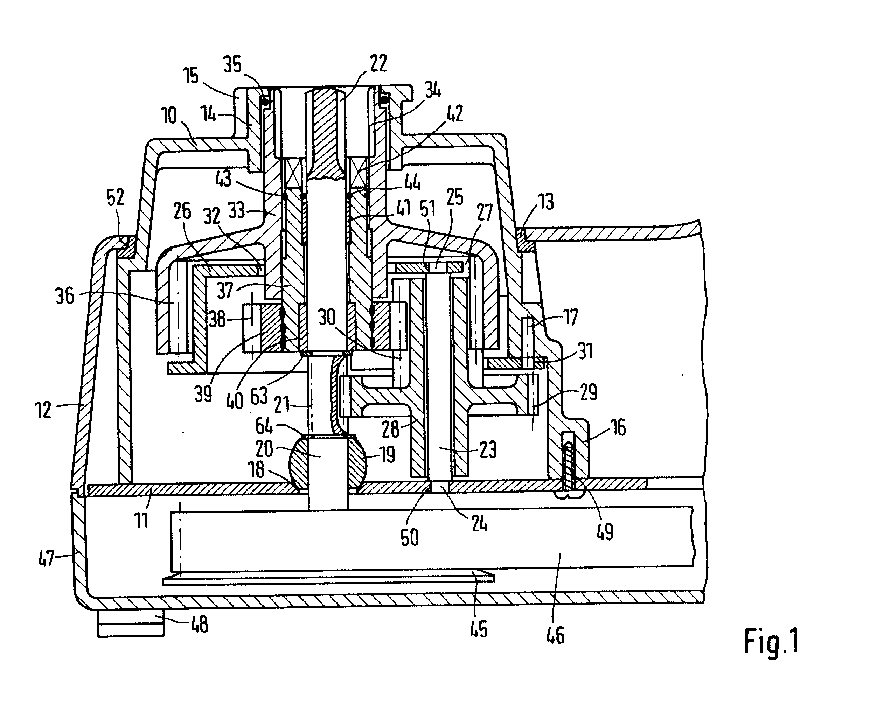

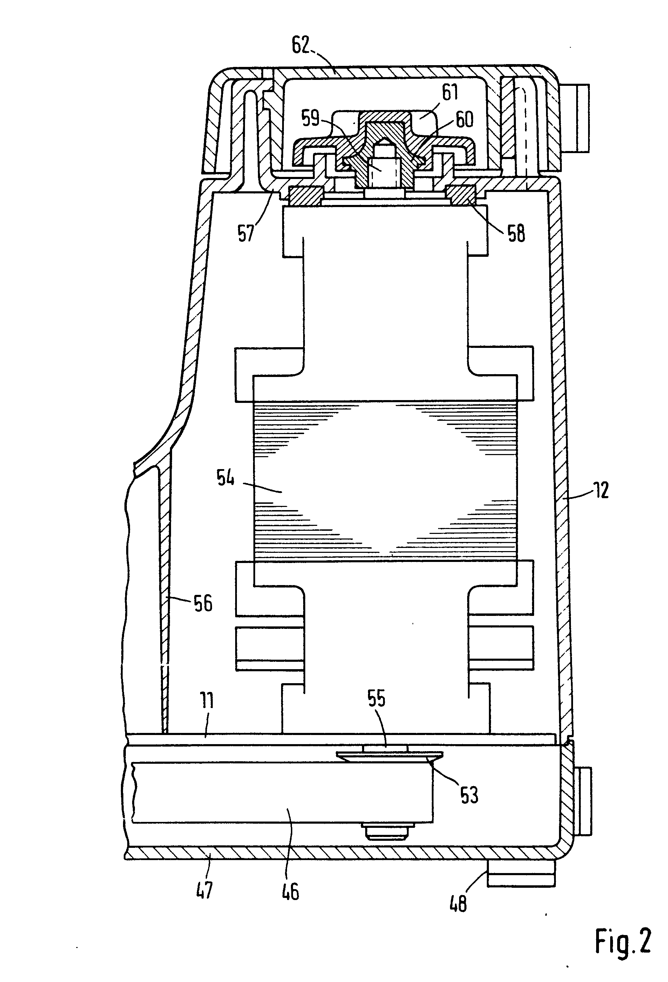

Wie anhand der Figur 2 gezeigt ist, kann der Elektromotor 54 auch in die erfindungsgemäße Küchenmaschinen-Antriebseinheit einbezogen werden. Das Gehäuseteil 10 und die Zwischenplatte 11 werden in dem aus den beiden Gehäuseteilen 12 und 47 bestehenden Gerätegehäuse eingebaut. Die Zwischenplatte 11 trägt den Elektromotor 54. Die Motorwelle 55 trägt ein Zahnrad 53 kleiner Zähnezahl für den Zahnriemen 46. Die Abtriebswelle 20 trägt, wie Figur 1 zeigt, ebenfalls ein Zahnrad 45 großer Zähnezahl, über das der Zahnriemen 46 geführt ist. Die Zahnräder 53 und 45 bilden mit dem Zahnriemen 46 ein drittes Untersetzungsgetriebe, das die Drehzahl-Motorwelle 55 zu der Abtriebswelle 20 im entsprechenden Verhältnis reduziert. Damit sind die Drehzahlen aller drei Abtriebe entsprechend reduziert, wenn man von der Drehzahl des Elektromotors 54 ausgeht. Das Gehäuseteil 47 weist Füße 48 auf und aus der Ausnehmung 52 des Gehäuseteils 12 ragt das Gehäuseteil 10 mit der Anschlußstelle für die drei Abtriebe. Das Dichtungselement 13 übernimmt die Abdichtung im Bereich der Ausnehmung 52 zwischen dem Gehäuseteil 10 und dem Gehäuseteil 12.

Die Rippe 56 des Gehäuseteils 12 schirmt den Motorraum ab und dient gleichzeitig als Stütze für die Zwischenplatte 11. In dem hochgezogenen Teil des Gehäuseteils 12 ist der Elektromotor 54 zusätzlich gelagert, wie die Lagerlemente 57 und 58 andeuten. Das obere Ende 59 der Motorwelle 55 trägt über ein Zwischenstück 60 ein Kupplungselement 61, das mittels eines abnehmbaren Deckels 62 abgedeckt ist. Bei abgenommenem Deckel 62 dient das Kupplungselement 61 als vierter Abtrieb für eine vierte Art von Küchengeräte, die mit hoher Drehzahl antreibbar sind. Die Drehzahl entspricht derMotordrehzahl und die Drehrichtung der Drehrichtung der Motorwelle 55. Die Küchengeräte vierter Art haben eine auf das Kupplungselement 61 abgestimmte Anschlußkupplung. Die Festlegung der Küchengeräte
am Gehäuseteil 12 erfolgt über an sich bekannte Verschlußelemente, wie Bajonettverschluß oder dgl.

A 3639 — 1 — 0022465

A n s p r ü c h e :

1. Küchenmaschinen-Antriebseinheit mit einer Abtriebswelle, deren Abtriebsende als erster Abtrieb für ein erstes aufsteckbares Werkzeug ausgebildet ist, bei der koaxial zur Abtriebswelle eine erste Abtriebshülse als zweiter Abtrieb für ein zweites einsteckbares Werkzeug angeordnet ist, wobei die erste Abtriebshülse mittels eines ersten Untersetzungsgetriebes von der Abtriebswelle antreibbar ist,
dadurch gekennzeichnet,
daß zwischen der Abtriebswelle (20) und der ersten Abtriebshülse (33) eine zweite zurückgesetzte Abtriebshülse (37) gelagert ist, die stirnseitig als dritter Abtrieb für ein drittes aufsteckbares Werkzeug ausgebildet ist und die mittels eines zweiten Untersetzungsgetriebes von der Abtriebswelle (20) antreibbar ist.

2. Küchenmaschinen-Antriebseinheit nach Anspruch 1,
dadurch gekennzeichnet,
daß die Abtriebswelle (20) mittels des Antriebsendes mit einer Motorwelle eines Elektromotors koppelbar ist.

3. Küchenmaschinen-Antriebseinheit nach Anspruch 1,
dadurch gekennzeichnet,
daß die Abtriebswelle (20) mittels des Antriebsendes und eines dritten Untersetzungsgetriebes mit der Motorwelle (55) eines Elektromotors (54) gekoppelt ist.

A 3639     - 2 -     0022465

4.  Küchenmaschinen-Antriebseinheit nach Anspruch 3,
    dadurch gekennzeichnet,
    daß das andere Ende (59) der Motorwelle (55) als
    vierter Abtrieb ein Kupplungselement (61) für ein
    aufsteckbares viertes Werkzeug trägt.

5.  Küchenmaschinen-Antriebseinheit nach Anspruch 4,
    dadurch gekennzeichnet,
    daß der vierte Abtrieb in einer Vertiefung des Gerätegehäuses mittels eines abnehmbaren Deckels (62)
    abgedeckt ist.

6.  Küchenmaschinen-Antriebseinheit nach Anspruch 1,
    dadurch gekennzeichnet,
    daß das erste Untersetzungsgetriebe ein Antriebsritzel (21) der Abtriebsewlle (20) und ein auf einer
    Zwischenwelle (23) gelagertes Doppel-Zahnrad (28) umfaßt, das mittels eines Zahnkranzes (29) großer Zähnezahl im Eingriff mit dem Antriebsritzel (21) und
    mittels eines Zahnkranzes (30) kleiner Zähnezahl
    im Eingriff mit einer Innenverzahnung (36) großer
    Zähnezahl der ersten Abtriebshülse (33) steht,
    und daß der Zahnkranz (30) kleiner Zähnezahl im Eingriff mit einem Zahnkranz (38) großer Zähnezahl steht,
    der fest mit der zweiten Abtriebshülse (37) verbunden
    ist.

7.  Küchenmaschinen-Antriebseinheit nach Anspruch 6,
    dadurch gekennzeichnet,
    daß die Zähnezahl des mit der zweiten Abtriebshülse
    (37) fest verbundenen Zahnkranzes (38) etwa halb so
    groß ist wie die Zähnezahl der Innenverzahnung (36)
    der ersten Abtriebshülse (33).

8. Küchenmaschinen-Antriebseinheit nach Anspruch 6 und 7, dadurch gekennzeichnet;
daß die Zwischenwelle (23) mit dem einen Ende (24) in einer Zwischenplatte (11) gelagert ist, in der auch das antriebsseitige Ende der Abtriebswelle (20) gelagert ist und die das erste und zweite Untersetzungsgetriebe abdeckt,
daß das andere Ende (25) der Zwischenwelle (23) in einer Zwischenglocke (26) gelagert ist, die in die Innenverzahnung (36) der ersten Abtriebshülse (33) ragt und einen Durchbruch (27) in der Seitenwand aufweist, über den der Zahnkranz (30) kleiner Zähnezahl des Doppel-Zahnrades (28) mit der Innenverzahnung (36) der ersten Abtriebshülse (33) im Eingriff steht,
daß die Zwischenglocke (26) und die Zwischenplatte (11) unverdrehbar mit dem Gehäuseteil (10) verbunden sind,
und daß der Zahnkranz (29) großer Zähnezahl des Doppel-Zahnrades (28) außerhalb der Zwischenglocke (26) mit dem Antriebsritzel (21) der Abtriebswelle (20) im Eingriff steht.

9. Küchenmaschinen-Antriebseinheit nach einem der Ansprüche 1 bis 8,
dadurch gekennzeichnet,
daß die zweite Abtriebshülse (37) im Anschluß an den als Steckkupplung (42) ausgebildeten dritten Abtrieb mittels Dichtungsringen (43,44) zur Abtriebswelle (20) und zur ersten Abtriebshülse (33) hin abgedichtet ist.

A 3639 - 4 - 0022465

10. Küchenmaschinen-Antriebseinheit nach einem der Ansprüche 1 bis 9,
dadurch gekennzeichnet,
daß die zweite Abtriebshülse (37) mittels Lagerbuchsen (40,41) auf der Abtriebswelle (20) und/oder in der ersten Abtriebshülse (33) gelagert ist.

11. Küchenmaschinen-Antriebseinheit nach einem der Ansprüche 1 bis 10,
dadurch gekennzeichnet,
daß die Abtriebswelle (20) vertikal angeordnet ist, wobei das Abtriebsende (22) oben liegt und das untere Antriebsende mittels eines als Zahnriemenantrieb ausgebildeten dritten Untersetzungsgetriebes mit der Motorwelle (55) eines vertikal im Gerätegehäuse angeordneten Elektromotors (54) gekoppelt ist und daß das obere Ende (59) der Motorwelle (55) das Kupplungselement (61) des vierten Abtriebes trägt.

Fig.1

Fig.2

Europäisches Patentamt

**EUROPÄISCHER RECHERCHENBERICHT**

0022465
Nummer der Anmeldung

EP 80 10 2806

| | **EINSCHLÄGIGE DOKUMENTE** | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | A 47 J 43/08 43/046 |
| D | US - A - 2 807 447 (VAUGHAN)<br><br>* Spalte 3, Zeilen 1-29; Figur 4 *<br><br>-- | 1,2 | |
| | CH - A - 312 934 (BOSCH)<br><br>* Das ganze Dokument *<br><br>-- | 2-5,11 | |
| | DE - B - 1 185 783 (BOSCH)<br><br>* Das ganze Dokument *<br><br>-- | 2-4,11 | RECHERCHIERTE SACHGEBIETE (Int. Cl.³) |
| | DE - B - 1 181 870 (GOELZ)<br><br>* Das ganze Dokument *<br><br>-- | 1,2 | A 47 J |
| | US - A - 3 109 949 (HARTWIG et al.)<br><br>* Das ganze Dokument *<br><br>------- | 1,2,10 | |

Der vorliegende Recherchenbericht wurde für alle Patentansprüche erstellt.

| Recherchenort | Abschlußdatum der Recherche | Prüfer |
|---|---|---|
| Den Haag | 15-10-1980 | SCHARTZ |

EPA form 1503.1 06.78